# EUROPÄISCHE PATENTSCHRIFT

(11) **EP 2 060 447 B1**
(45) Veröffentlichungstag und Bekanntmachung des Hinweises auf die Patenterteilung: **22.09.2010**
(21) Anmeldenummer: 08019320.4
(22) Anmeldetag: 05.11.2008
(51) Int. Cl.: B60R 21/01

(54) **Verfahren zum sicheren Anbringen eines Sensors an einem Kraftfahrzeug und entsprechend ausgestalteter Sensor und Kraftfahrzeug**
Method of securely attaching a sensor in a motor vehicle and appropriately designed sensor and motor vehicle
Procédé destiné à l'application sécurisée d'un capteur sur un véhicule automobile et capteur équipé de manière correspondante ainsi que véhicule automobile

(30) Priorität: 19.11.2007 DE 102007055114
(43) Veröffentlichungstag der Anmeldung: 20.05.2009
(73) Patentinhaber: Volkswagen Aktiengesellschaft, 38436 Wolfsburg (DE)
(72) Erfinder: Jonuscheit, Bernd, 38477 Jembke (DE); Menzel, Werner, 31226 Peine (DE)

(56) Entgegenhaltungen:
- WO-A-2005/071271
- DE-A1-102004 050 674
- DE-U1- 20 106 753

## Beschreibung

Die vorliegende Erfindung betrifft ein Verfahren zum sicheren Anbringen eines Sensors an einem Kraftfahrzeug sowie einen entsprechenden Sensor und ein entsprechendes Kraftfahrzeug. Insbesondere betrifft die vorliegende Erfindung ein Montageverfahren, wobei ein korrektes Anbringen eines Drucksensors bzw. Airbagsensors prozesssicher dokumentiert wird.

Nach dem Stand der Technik wird ein korrektes Anbringen eines Sensors nur dahingehend dokumentiert, dass das korrekte Anbringen des Sensors, z.B. eines mit zumindest einem Clip anzubringenden Drucksensors, visuell von einem Monteur überprüft wird und dann schriftlich von dem Monteur-bestätigt wird.

Ausgehend von diesem Stand der Technik ist es die Aufgabe der vorliegenden Erfindung, einen Sensor derart an einem Kraftfahrzeug anzubringen, so dass bei einer Montage des Sensors ein menschlicher Fehler nahezu ausgeschlossen wird.

Diese Aufgabe wird erfindungsgemäß durch ein Verfahren zum sicheren Anbringen eines Sensors an einem Kraftfahrzeug nach Anspruch 1 und durch einen Sensor für ein Kraftfahrzeug nach Anspruch 7 gelöst. Die abhängigen Ansprüche definieren bevorzugte und vorteilhafte Ausführungsformen der Erfindung.

Im Rahmen der vorliegenden Erfindung wird ein Verfahren zum sicheren Anbringen eines Sensors, insbesondere eines Drucksensors oder eines Airbagsensors, an einem Kraftfahrzeug bereitgestellt. Dabei wird in einem ersten Schritt der Sensor an oder in dem Kraftfahrzeug angebracht. In einem zweiten Schritt, welcher dem ersten Schritt folgt, wird ein markierendes Bauelement des Sensors von einer ersten Stellung in eine zweite Stellung, welche sich sichtbar von der ersten Stellung unterscheidet, überführt. Dabei ist es nur möglich, den zweiten Schritt auszuführen, wenn der erste Schritt, nämlich das Anbringen des Sensors, korrekt ausgeführt wurde.

Unter dem markierenden Bauelement des Sensors wird dabei ein Bauteil des Sensors verstanden, welches das korrekte Anbringen des Sensors derart anzeigt oder markiert, wenn sich das Bauteil in der zweiten Stellung befindet, dass beispielsweise ein Monteur, aber auch ein Montageroboter, rasch erfassen kann, dass der Sensor in einem bestimmten Arbeitsgang korrekt angebracht worden ist, indem der Monteur oder der Roboter das Bauteil anschaut bzw. optisch überprüft.

Indem es nur möglich ist, das markierende Bauelement von der ersten Stellung in die zweite Stellung zu überführen (z.B. zu schieben oder zu drücken), wenn der Sensor korrekt angebracht worden ist, ist sichergestellt, dass sich das markierende Bauelement nur dann in der zweiten Stellung befindet, wenn der Sensor korrekt angebracht worden ist. Daher markiert das markierende Bauelement, welches sich in der zweiten Stellung befindet, prozesssicher ein korrektes Anbringen des Sensors.

Vorteilhafterweise kann nun die erste und die zweite Stellung des markierenden Bauelements dazu verwendet werden, einen Fortschritt einer Montage des Sensors zu dokumentieren. Befindet sich das markierende Bauelement beispielsweise noch in der ersten Stellung, ist der Sensor noch nicht korrekt an dem Kraftfahrzeug angebracht worden. Dagegen dokumentiert das markierende Bauelement in der zweiten Stellung, dass der entsprechende Sensor korrekt an dem Kraftfahrzeug angebracht ist.

Bei einer erfindungsgemäßen Ausführungsform wird der Sensor derart beispielsweise mit dem Kraftfahrzeug verriegelt, wenn das markierende Bauelement von der ersten Stellung in die zweite Stellung überführt wird, dass der Sensor nicht von dem Kraftfahrzeug gelöst werden kann, ohne dass das markierende Bauelement entweder in die erste Stellung zurück geführt wird oder beschadigt oder zerstört wird.

Indem ein Lösen des Sensors zwangsläufig dazu führt, dass sich das markierende Bauelement nicht mehr in der zweiten Stellung befindet, ist vorteilhafterweise sichergestellt, dass ein markierendes Bauelement in der zweiten Stellung mit einem korrekt angebrachten Sensor gleichzusetzen ist.

Bei einer weiteren erfindungsgemäßen Ausführungsform wird in einem nachfolgenden Schritt ein Stecker derart mit dem Sensor gekoppelt, dass ein elektrischer Leitungsstrang, mit welchem der Stecker gekoppelt ist, elektrisch mit einer elektrischen Leitung des Sensors verbunden ist. Dabei ist es nur möglich, diesen weiteren Schritt durchzuführen, wenn vorher der zweite Schritt durchgeführt worden ist, d.h. wenn sich das markierende Bauelement in der zweiten Stellung befindet.

Diese Ausführungsform soll jegliche Art einer Informationsübertragung zwischen dem Sensor und dem Stecker umfassen, wie z.B. eine optische Kopplung, eine magnetische Kopplung, eine elektromechanische Kopplung usw. D.h. diese Ausführungsform umfasst beispielsweise auch den Fall umfassen, dass eine optische Leitung optisch mit einer optischen Leitung des Sensors verbunden wird.

Indem der Stecker nur dann mit dem Sensor gekoppelt werden kann, wenn der Sensor korrekt angebracht worden ist, stellt die Kopplung des Sensors mit dem Stecker quasi automatisch eine Überprüfung dar, ob der Sensor korrekt angebracht worden ist. Mit anderen Worten wird spätestens bei einem Versuch, den Stecker mit dem Sensor zu koppeln, festgestellt, dass der Sensor nicht korrekt angebracht worden ist.

Der Sensor kann wasserdicht an einer Wand des Kraftfahrzeug innerhalb eines Lochs dieser Wand angebracht werden, so dass eine Dichtung des Sensors über den gesamten Umfang des Loches mit einer ausreichend hohen Anpresskraft zum Abdichten des Loches an die Wand angedrückt wird.

Dadurch ist es vorteilhafter Weise auch möglich, das erfindungsgemäße Verfahren dazu einzusetzen, einen Sensor an einer Wand sicher anzubringen, welche einen Nassraum von einem Trockenraum des Kraftfahrzeugs trennt.

Im Rahmen der vorliegenden Erfindung wird auch ein Sensor, insbesondere ein Drucksensor oder ein Airbagsensor, eines Kraftfahrzeug bereitgestellt. Dabei umfasst der Sensor ein markierendes Bauelement und ein bewegliches Element. Der Sensor ist nun derart ausgestaltet, dass das bewegliche Element eine erste Elementstellung aufweist, wenn der Sensor nicht korrekt an einem Kraftfahrzeug angebracht ist. Das bewegliche Element nimmt dann eine zweite Elementstellung ein, welche sich von der ersten Elementstellung unterscheidet, wenn der Sensor korrekt an dem Kraftfahrzeug angebracht worden ist. Das markierende Bauelement wird nun derart von dem beweglichen Element blockiert, wenn sich das bewegliche Element in der ersten Elementstellung befindet, dass das markierende Bauelement nicht aus seiner ersten Bauelementstellung in seine zweite Bauelementstellung, welche sich deutlich von der ersten Bauelementstellung unterscheidet, überführt werden kann. Das markierende Bauelement kann nämlich nur dann von seiner ersten Bauelementstellung in seine zweite Bauelementstellung überführt (d.h. z.B. geschoben oder gedrückt) werden, wenn sich das bewegliche Element in der zweiten Elementstellung befindet. Dabei stellt ein Unterschied zwischen der ersten Bauelementstellung und der zweiten Bauelementstellung einen bezüglich des Sensors sichtbaren Unterschied dar. Das heißt, ein Monteur oder ein Roboter, welcher den angebrachten Sensor betrachtet, kann einfach unterscheiden, ob sich das markierende Bauelement in der ersten Bauelementstellung oder in der zweiten Bauelementstellung befindet.

Die oben definierte erste bzw. zweite Elementstellung definiert eine erste bzw. zweite Stellung des beweglichen Elements, und die oben definierte erste bzw. zweite Bauelementstellung definiert eine erste bzw. zweite Stellung des markierenden Bauelements.

Die Vorteile des erfindungsgemäßen Sensors entsprechen im Wesentlichen den Vorteilen des vorab diskutierten erfindungsgemäßen Verfahrens, weshalb hier auf eine Wiederholung verzichtet wird.

Bei einer erfindungsgemäßen Ausführungsform ist der Sensor derart ausgestaltet, dass der Stecker aufgebracht werden muss, um den Stecker mit dem Sensor elektrisch leitend zu koppeln. Dabei befindet sich das markierende Bauelement in seiner ersten Bauelementstellung derart in einer Bewegungsbahn des Steckers, welche der Stecker beim Aufbringen durchläuft, dass der Stecker nicht aufgebracht werden kann, da der Stecker während des Aufbringens dann von dem markierenden Bauelement blockiert wird. Unter dem Aufbringen des Steckers wird dabei beispielsweise ein Aufschieben oder Aufstecken des Steckers auf den Sensor verstanden.

Indem der Stecker nicht auf den Sensor aufgebracht werden kann, wenn sich das markierende Bauelement nicht in seiner zweiten Bauelementstellung befindet, ist sichergestellt, dass der Stecker nur dann auf den Sensor aufgebracht werden kann, wenn der Sensor korrekt an dem Kraftfahrzeug angebracht ist.

Bei einer weiteren erfindungsgemäßen Ausführungsform kann das markierende Bauelement nicht aus seiner zweiten Bauelementstellung entfernt oder gebracht werden, wenn der Stecker auf den Sensor aufgebracht worden ist.

Dadurch ist sichergestellt, dass der Sensor in seiner korrekt an dem Kraftfahrzeug angebrachten Stellung solange verbleibt, solange der Stecker auf dem Sensor aufgebracht ist.

Im Rahmen der vorliegenden Erfindung wird auch ein Kraftfahrzeug bereitgestellt, welches einen erfindungsgemäßen Sensor umfasst.

Dabei umfasst das Kraftfahrzeug insbesondere eine Wand mit einem Loch, welche einen Nassraum des Kraftfahrzeugs von einem Trockenraum des Kraftfahrzeugs trennt. Der Sensor kann nun derart innerhalb des Loches an der Wand angebracht sein, dass eine Dichtung des Sensors in dem Trockenraum angebracht ist und über den gesamten Umfang des Loches mit einer ausreichend hohen Anpresskraft zum Abdichten des Loches an die Wand angedrückt wird, wenn sich das markierende Bauelement in der zweiten Bauelementstellung befindet. Damit ist vorteilhafterweise sichergestellt, dass das markierende Bauelement, welches sich in der zweiten Bauelementstellung befindet, anzeigt, dass der Sensor derart an der Wand angebracht ist, dass der Nassraum durch die entsprechend angezogene Dichtung des Sensors gegenüber dem Trockenraum abgedichtet ist.

Im Folgenden werden erfindungsgemäße Ausführungsformen mit Bezug auf die Zeichnung im Detail erläutert.
- Fig. 1: stellt einen erfindungsgemäßen Sensor dar.
- In Fig. 2: ist ein markierendes Bauelement und ein bewegliches Element des Sensors der Fig. 2 im Detail dargestellt.
- Fig. 3: stellt schematisch ein erfindungsgemäßes Kraftfahrzeug mit einem erfindungsgemäßen Sensor dar.

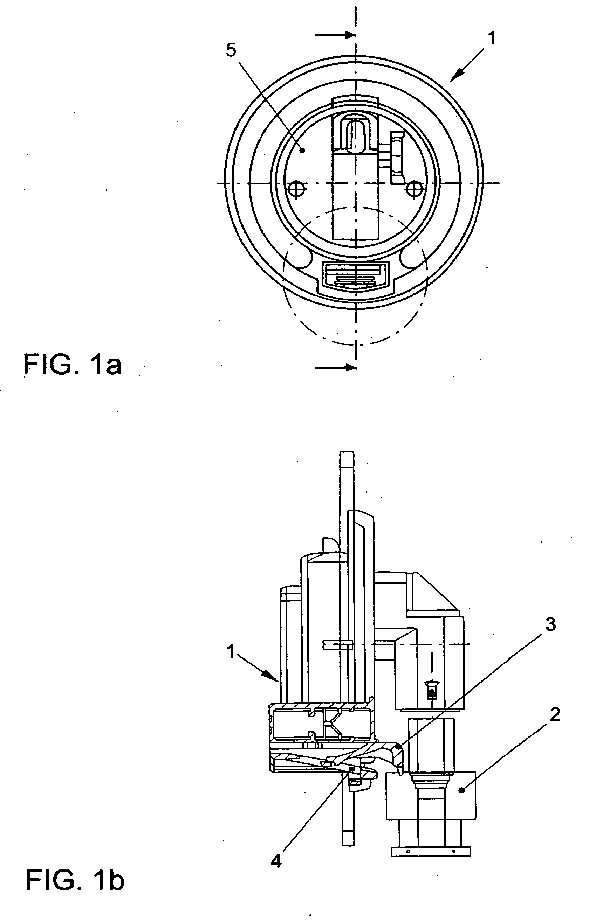

In Fig. 1 ist ein Drucksensor 1 dargestellt, welcher mittels eines beweglichen Rasthakens (nicht dargestellt) in einem Loch 5 einer Wand eines Kraftfahrzeugs anzubringen bzw. anzuclipsen ist, welche innerhalb des Kraftfahrzeugs einen Nassraum von einem Trockenraum trennt. Der Drucksensor 1 ist dabei mit einer umlaufenden Dichtung versehen, welche das Loch 5 wasserdicht abdichtet, da eine Dichtungslippe der Dichtung mit einem angemessenen Anpressdruck an die Wand gedrückt wird, wenn der Drucksensor 1 korrekt angebracht worden ist. Der in Fig. 1 dargestellt Drucksensor 1 ist somit für einen Festsitz in Blech oder Kunststoff ausgelegt.

Die Dichtung 1 umfasst auch eine bewegliche Zunge 4 und ein markierendes Bauelement 3. Dabei kann sowohl die bewegliche Zunge 4 als auch das markierende Bauelement 3 zwei Stellungen annehmen, nämlich die bewegliche Zunge 4 eine erste und eine zweite Zungenstellung und das markierende Bauelement eine erste und eine zweite Bauelementstellung. In der Fig. 1 weisen sowohl die bewegliche Zunge 4 als auch das markierende Element 3 jeweils ihre erste Zungenstellung bzw. ihre erste Bauelementstellung auf, was bedeutet, dass der Drucksensor 1 noch nicht korrekt angebracht worden ist.

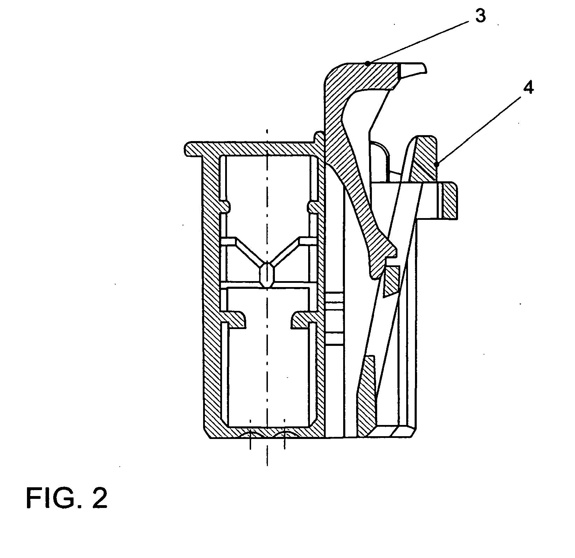

Die bewegliche Zunge 4 und das markierende Bauelement 3 sind vergrößert ebenfalls in Fig. 2 dargestellt. Wenn der Drucksensor 1 korrekt angebracht wird, wird die bewegliche Zunge 4 in der Fig. 2 nach links geschoben und in eine zweite Zungenstellung überführt. Nur wenn sich die bewegliche Zunge 4 in der zweiten Zungenstellung befindet, kann das markierende Bauelement, welches bisweilen auch als roter Nagel bezeichnet wird, nach unten gedrückt werden und seine zweite Bauelementsteltung annehmen. Der Drucksensor 1 ist nun derart ausgestaltet, dass es nicht möglich ist, den Drucksensor 1 von der Wand zu lösen, ohne dass das markierende Bauelement 3 herausgezogen wird, also wieder in seine erste Bauelementstellung überführt wird.

Mit anderen Worten zeigt ein niedergedrücktes markierendes Bauelement 3, welches sich in der zweiten Bauelementstellung befindet, an, dass der Drucksensor 1 korrekt angebracht worden ist.

Nur wenn sich das markierende Bauelement 3 in der zweiten Bauelementstellung befindet, kann ein Stecker 2, über welchen elektrische Signale von dem Drucksensor 1 abgeführt werden, auf den Sensor 1 aufgeschoben werden. Wenn sich das markierende Bauelement 3 nämlich in seiner ersten Bauelementstellung befindet, wie es in Fig. 1b dargestellt ist, ragt das markierende Bauelement 3 in eine Bewegungsbahn hinein, welche der Stecker 2 durchläuft, wenn er auf den Sensor 1 aufgeschoben wird. Mit anderen Worten blockiert das markierende Bauelement 3 den Stecker 2, wenn dieser auf den Sensor 1 aufgeschoben werden soll, solange sich das markierende Bauelement 3 in seiner ersten Bauelementstellung befindet.

Damit ist vorteilhafterweise sichergestellt, dass der Stecker 2 nur dann auf den Sensor 1 aufgeschoben werden kann, wenn sich das markierende Bauelement 3 in seiner zweiten Bauelementstellung befindet, was gleichbedeutend mit der Tatsache ist, dass der Sensor 1 korrekt angebracht worden ist, wie es vorab ausgeführt ist.

Wenn der Stecker 2 einmal auf den Sensor 1 aufgeschoben bzw. aufgebracht worden ist, kann das markierende Bauelement 3 nicht mehr in seine erste Bauelementsstellung gebracht werden, da dies von dem aufgebrachten Stecker 2 verhindert wird, welcher sich direkt über dem markierenden Bauelement 3 befindet. Daher kann auch die bewegliche Zunge 4 nicht mehr in ihre erste Zungenstellung überführt werden. Da ein Lösen des Drucksensors 1 voraussetzt, dass sich die bewegliche Zunge 4 in ihrer ersten Zungenstellung befindet, ist somit sichergestellt, dass der Drucksensor 1 korrekt an der Wand angebracht ist, solange der Stecker 2 auf den Sensor 1 aufgeschoben bzw. mit dem Sensor 1 gekoppelt ist.

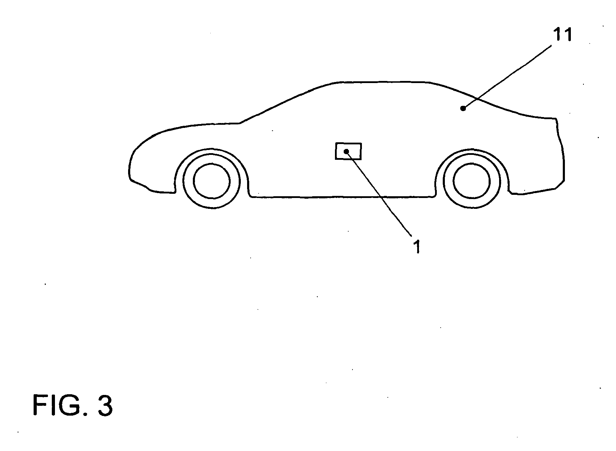

In Fig. 3 ist schematisch ein erfindungsgemäßes Kraftfahrzeug 11 dargestellt. Dabei ist ein erfindungsgemäßer Drucksensor 1 sowohl in einer Tür des Kraftfahrzeugs vorn rechts als auch in einer Tür des Kraftfahrzeugs vorn links vorhanden. Da das Kraftfahrzeug 11 in Fig. 3 von der Seite dargestellt ist, ist nur ein Drucksensor 1 sichtbar.

### Bezugszeichenliste

- 1: Drucksensor
- 2: Stecker
- 3: markierendes Element
- 4: bewegliche Zunge
- 5: Loch
- 11: Kraftfahrzeug

## Patentansprüche

1. Verfahren zum sicheren Anbringen eines Sensors an einem Kraftfahrzeug,
wobei der Sensor (1) in einem ersten Schritt an dem Kraftfahrzeug (11) angebracht wird, **dadurch gekennzeichnet,**
**dass** in einem zweiten Schritt ein markierendes Bauelement (3) des Sensors (1) von einer ersten Stellung in eine von der ersten Stellung sichtbar unterschiedliche zweite Stellung überführt wird, und
**dass** der zweite Schritt nur durchgeführt werden kann, wenn der erste Schritt korrekt ausgeführt wurde.

2. Verfahren nach Anspruch 1, **dadurch gekennzeichnet, dass** die erste und die zweite Stellung des markierenden Bauelements (3) verwendet wird, um einen Fortschritt einer Montage des Sensors (1) zu dokumentieren.

3. Verfahren nach Anspruch 1 oder 2, **dadurch gekennzeichnet, dass**, indem das markierende Bauelement (3) von der ersten Stellung in die zweite Stellung überführt wird, der Sensor (1) derart verriegelt wird, dass er nicht von dem Kraftfahrzeug (11) gelöst werden kann, ohne dass das markierende Bauelement (3) wieder in die erste Stellung überführt wird oder ohne dass das markierende Bauelement (3) zerstört wird.

4. Verfahren nach einem der vorhergehenden Ansprüche, **dadurch gekennzeichnet, dass** in einem dritten Schritt ein Stecker (2), um eine elektrische Leitung elektrisch mit einer elektrischen Leitung des Sensors (1) zu verbinden, mit dem Sensor (1) gekoppelt wird, und dass der dritte Schritt nur durchgeführt werden kann, wenn der zweite Schritt durchgeführt worden ist.

5. Verfahren nach einem der vorhergehenden Ansprüche, **dadurch gekennzeichnet, dass** der Sensor ein Drucksensor (1) oder ein Airbagsensor ist.

6. Verfahren nach einem der vorhergehenden Ansprüche, **dadurch gekennzeichnet, dass** der Sensor (1) wasserdicht an einer Wand des Kraftfahrzeugs (11) innerhalb eines Loches (5) der Wand angebracht wird, so dass eine Dichtung des Sensors (1) über den gesamten Umfang des Loches (5) mit einer ausreichend hohen Anpresskraft zum Abdichten des Loches (5) an die Wand angedrückt ist.

7. Sensor für ein Kraftfahrzeug,
**dadurch gekennzeichnet,**
**dass** der Sensor (1) ein markierendes Bauelement (3) und ein bewegliches Element (4) umfasst,
**dass** der Sensor (1) derart ausgestaltet ist,
**dass** das bewegliche Element (4) eine erste Elementstellung aufweist, wenn der Sensor (1) nicht an dem Kraftfahrzeug (11) angebracht ist, und dass das bewegliche Element (4) eine zweite Elementstellung einnimmt, wenn der Sensor (1) korrekt an dem Kraftfahrzeug (11) angebracht ist,
**dass** das markierende Bauelement (3) derart von dem in der ersten Elementstellung befindlichen beweglichen Element (4) blockiert wird, dass das markierende Bauelement (3) nicht von einer ersten Bauelementstellung in eine zweite Bauelementstellung überführbar ist,
**dass** das markierende Bauelement (3) nur dann von ersten Bauelementstellung in die zweite Bauelementstellung überführbar ist, wenn sich das bewegliche Element (4) in der zweiten Elementstellung befindet, und
**dass** ein Unterschied zwischen der ersten Bauelementstellung und der zweiten Bauelementstellung einen sichtbaren Unterschied bezüglich des angebrachten Sensors (1) darstellt.

8. Sensor nach Anspruch 7, **dadurch gekennzeichnet, dass** der Sensor (1) derart ausgestaltet ist, dass der Sensor (1) nicht von dem Kraftfahrzeug (11) gelöst werden kann, wenn sich das markierende Bauelement (3) in der zweiten Bauelementstellung befindet.

9. Sensor nach Anspruch 7 oder 8, **dadurch gekennzeichnet, dass** der Sensor (1) derart ausgestaltet ist, dass ein Stecker (2), um eine elektrische Leitung elektrisch mit einer elektrischen Leitung des Sensors (1) zu verbinden, nur dann mit dem Sensor (1) elektrisch leitend koppelbar ist, wenn sich das markierende Bauelement (3) in der zweiten Bauelementstellung befindet.

10. Sensor nach Anspruch 9, **dadurch gekennzeichnet, dass** der Sensor (1) derart ausgestaltet ist, dass der Stecker (2), um den Stecker (2) mit dem Sensor (1) elektrisch leitend zu koppeln, aufzubringen ist, dass das markierende Bauelement (3) in seiner ersten Bauelementstellung derart in eine Bewegungsbahn des Steckers (2), welche der Stecker (2) beim Aufbringen durchläuft, hervorragt, dass der Stecker (2) während des Aufbringens gegen das markierende Bauelement (3) derart stößt, dass der Stecker (2) nicht aufgebracht werden kann.

11. Sensor nach Anspruch 9 oder 10, **dadurch gekennzeichnet, dass** der Sensor (1) derart ausgestaltet ist, dass das markierende Bauelement (3) nicht aus seiner zweiten Bauelementstellung entfernbar ist, wenn der Stecker (2) auf den Sensor (1) aufgebracht ist.

12. Sensor nach einem der Ansprüche 7-11, **dadurch gekennzeichnet, dass** der Sensor ein Drucksensor (1) oder ein Airbagsensor ist.

13. Kraftfahrzeug mit einem Sensor nach einem der Ansprüche 7-12, welcher an dem Kraftfahrzeug (11) angebracht ist.

14. Kraftfahrzeug nach Anspruch 13, **dadurch gekennzeichnet, dass** der Sensor (1) eine Dichtung umfasst, und dass der Sensor (1) derart ausgestaltet ist, dass der Sensor (1) wasserdicht an einer Wand des Kraftfahrzeugs (11) innerhalb eines Loches (5) der Wand derart angebracht ist, dass die Dichtung über den gesamten Umfang des Loches (5) mit einer ausreichend hohen Anpresskraft zum Abdichten des Loches (5) an die Wand angedrückt ist, wenn sich das markierende Bauelement (3) in der zweiten Bauelementstellung befindet.

15. Kraftfahrzeug nach Anspruch 13 oder 14, **dadurch gekennzeichnet, dass** das Kraftfahrzeug (11) eine Wand mit einem Loch (5) umfasst, welche einen Nassraum des Kraftfahrzeugs (11) von einem Trockenraum des Kraftfahrzeugs (11) trennt, und dass der Sensor (1) derart innerhalb des Loches (5) an der Wand angebracht ist, dass eine Dichtung des Sensors (1) in dem Trockenraum angebracht ist.

## Claims

1. Method for securely fitting a sensor on a motor vehicle, a sensor (1) being fitted on the motor vehicle (11) in a first step, **characterized in that** in a second step a marking component (3) of the sensor (1) is moved from a first position into a second position visibly different from the first position, and **in that** the second step can be carried out only when the first step has been executed correctly.

2. Method according to Claim 1, **characterized in that** the first and the second positions of the marking component (3) are used in order to document progress in mounting the sensor (1).

3. Method according to Claim 1 or 2, **characterized in that** when the marking component (3) is moved from a first position into a second position the sensor (1) is locked in such a way that it can be detached from the motor vehicle (11) without the marking component (3) being moved into the first position again, or without the marking component (3) being destroyed.

4. Method according to one of the preceding claims, **characterized in that** in a third step a plug connector (2) is coupled to the sensor (1) in order to electrically connect an electric line to an electric line of the sensor (1), and **in that** the third step can be carried out only when the second step has been carried out.

5. Method according to one of the preceding claims, **characterized in that** the sensor is a pressure sensor (1) or an airbag sensor.

6. Method according to one of the preceding claims, **characterized in that** the sensor (1) is fitted in watertight fashion on a wall of the motor vehicle (11) inside a hole (5) of the wall such that a seal of the sensor (1) is pressed against the wall over the entire circumference of the hole (5) with a sufficiently high contact force in order to seal the hole (5).

7. Sensor for a motor vehicle, **characterized in that** the sensor (1) comprises a marking component (3) and a movable element (4), **in that** the sensor (1) is configured in such a way that the movable element (4) has a first element position when the sensor (1) is not fitted on the motor vehicle (11), and that the movable element (4) assumes a second element position when the sensor (1) is fitted correctly on the motor vehicle (11), **in that** the marking component (3) is blocked by the movable element (4) located in the first element position in such a way that the marking component (3) cannot be moved from a first component position into a second component position, **in that** the marking component (3) can be moved from the first component position into the second component position only when the movable element (4) is located in the second element position, and **in that** a difference between the first component position and the second component position constitutes a visible difference with reference to the fitted sensor (1).

8. Sensor according to Claim 7, **characterized in that** the sensor (1) is configured in such a way that the sensor (1) cannot be detached from the motor vehicle (11) when the marking component (3) is located in the second component position.

9. Sensor according to Claim 7 or 8, **characterized in that** the sensor (1) is configured in such a way that a plug connector (2) can be coupled in an electrically conducting fashion to the sensor (1) in order to electrically connect an electric line to an electric line of the sensor (1), only when the marking component (3) is located in the second component position.

10. Sensor according to Claim 9, **characterized in that** the sensor (1) is configured in such a way that the plug connector (2) is to be mounted in order to couple the plug connector (2) to the sensor (1) in an electrically conducting fashion, and **in that** in its first component position the marking component (3) projects into a movement track of the plug connector (2), which the plug connector (2) traverses when being mounted, in such a way that during mounting the plug connector (2) strikes against the marking component (3) in such a way that the plug connector (2) cannot be mounted.

11. Sensor according to Claim 9 or 10, **characterized in that** the sensor (1) is configured in such a way that the marking component (3) cannot be removed from its second component position when the plug connector (2) is mounted on the sensor (1).

12. Sensor according to one of Claims 7-11, **characterized in that** the sensor is a pressure sensor (1) or an airbag sensor.

13. Motor vehicle having a sensor according to one of Claims 7-12, which is fitted on the motor vehicle (11).

14. Motor vehicle according to Claim 13, **characterized in that** the sensor (1) comprises a seal, and **in that** the sensor (1) is configured in such a way that the sensor (1) is fitted in a watertight fashion on a wall of the motor vehicle (11) inside a hole (5) in the wall in such a way that the seal is pressed against the wall over the entire circumference of the hole (5) with a sufficiently high contact force in order to seal the hole (5) when the marking component (3) is located in the second component position.

15. Motor vehicle according to Claim 13 or 14, **characterized in that** the motor vehicle (11) comprises a wall which has a hole (5) and which separates a wet space of the motor vehicle (11) from a dry space of the motor vehicle (11), and **in that** the sensor (1) is fitted on the wall inside the hole (5) in such a way that a seal of the sensor (1) is fitted in the dry space.

## Revendications

1. Procédé de montage sécurisé d'un capteur sur un véhicule automobile, le capteur (1) étant monté sur le véhicule automobile (11) au cours d'une première étape, **caractérisé en ce**
**qu'**au cours d'une deuxième étape, un composant de marquage (3) du capteur (1) est transféré d'une première position dans une deuxième position visiblement différente de la première position, et
**que** la deuxième étape ne peut être exécutée que si la première étape a été exécutée correctement.

2. Procédé selon la revendication 1, **caractérisé en ce que** la première et la deuxième positions du composant de marquage (3) sont utilisées pour documenter une progression d'un montage du capteur (1).

3. Procédé selon la revendication 1 ou 2, **caractérisé en ce que** du fait que le composant de marquage (3) est transféré de la première position dans la deuxième position, le capteur (1) est verrouillé de telle sorte qu'il ne peut pas être détaché du véhicule automobile (11) sans que le composant de marquage (3) ne soit de nouveau transféré dans la première position ou sans que le composant de marquage (3) ne soit détruit.

4. Procédé selon l'une des revendications précédentes, **caractérisé en ce que** dans une troisième étape, une fiche (2) est connectée au capteur (1) pour relier électriquement une ligne électrique avec une ligne électrique du capteur (1) et que la troisième étape ne peut être exécutée que lorsque la deuxième étape a été exécutée.

5. Procédé selon l'une des revendications précédentes, **caractérisé en ce que** le capteur est un capteur de pression (1) ou un capteur de coussin gonflable de sécurité.

6. Procédé selon l'une des revendications précédentes, **caractérisé en ce que** le capteur (1) est monté de manière étanche sur une paroi du véhicule automobile (11) à l'intérieur d'un trou (5) de la paroi, de sorte qu'une garniture d'étanchéité du capteur (1) soit comprimée contre la paroi sur tout le pourtour du trou (5) avec une force de compression suffisamment élevée pour rendre le trou (5) étanche.

7. Capteur pour véhicule automobile, **caractérisé en ce**
**que** le capteur (1) comprend un composant de marquage (3) et un élément mobile (4),
**que** le capteur (1) est configuré de telle sorte que l'élément mobile (4) présente une première position d'élément lorsque le capteur (1) n'est pas monté sur le véhicule automobile (11) et que l'élément mobile (4) adopte une deuxième position d'élément lorsque le capteur (1) est monté correctement sur le véhicule automobile (11),
**que** le composant de marquage (3) est bloqué par l'élément mobile (4) qui se trouve dans la première position d'élément de telle sorte que le composant de marquage (3) ne peut pas être transféré d'une première position de composant dans une deuxième position de composant,
**que** le composant de marquage (3) ne peut alors être transféré de la première position de composant dans la deuxième position de composant que lorsque l'élément mobile (4) se trouve dans la deuxième position d'élément, et
**qu'**une différence entre la première position de composant et la deuxième position de composant représente une différence visible en rapport avec le capteur (1) monté.

8. Capteur selon la revendication 7, **caractérisé en ce que** le capteur (1) est configuré de telle sorte que le capteur (1) ne peut pas être détaché du véhicule automobile (11) lorsque le composant de marquage (3) se trouve dans la deuxième position de composant.

9. Capteur selon la revendication 7 ou 8, **caractérisé en ce que** le capteur (1) est configuré de telle sorte qu'une fiche (2) destinée à relier électriquement une ligne électrique avec une ligne électrique du capteur (1) ne peut alors être connectée électriquement au capteur (1) que lorsque le composant de marquage (3) se trouve dans la deuxième position de composant.

10. Capteur selon la revendication 9, **caractérisé en ce que** le capteur (1) est configuré de telle sorte que la fiche (2), pour pouvoir connecter électriquement la fiche (2) au capteur (1), doit être installée de telle sorte que le composant de marquage (3) dans sa première position de composant fait saillie dans une voie de mouvement de la fiche (2), laquelle voie de mouvement est parcourue par la fiche (2) lors du montage, de sorte que la fiche (2) vient en butée contre le composant de marquage (3) pendant le montage de manière à ce que la fiche (2) ne puisse pas être installée.

11. Capteur selon la revendication 9 ou 10, **caractérisé en ce que** le capteur (1) est configuré de telle sorte que le composant de marquage (3) ne peut pas quitter sa deuxième position de composant lorsque la fiche (2) est montée sur le capteur (1).

12. Capteur selon l'une des revendications 7 à 11, **caractérisé en ce que** le capteur est un capteur de pression (1) ou un capteur de coussin gonflable de sécurité.

13. Véhicule automobile équipé d'un capteur selon l'une des revendications 7 à 12, lequel capteur est monté sur le véhicule automobile (11).

14. Véhicule automobile selon la revendication 13, **caractérisé en ce que** le capteur (1) comprend une garniture d'étanchéité et que le capteur (1) est configuré de telle sorte que le capteur (1) est monté de manière étanche sur une paroi du véhicule automobile (11) à l'intérieur d'un trou (5) de la paroi, de sorte que la garniture d'étanchéité soit comprimée contre la paroi sur tout le pourtour du trou (5) avec une force de compression suffisamment élevée pour rendre le trou (5) étanche lorsque le composant de marquage (3) se trouve dans la deuxième position de composant.

15. Véhicule automobile selon la revendication 13 ou 14, **caractérisé en ce que** le véhicule automobile (11) comprend une paroi munie d'un trou (5), laquelle sépare un espace mouillé du véhicule automobile (11) d'un espace sec du véhicule automobile (11), et que le capteur (1) est monté à l'intérieur du trou (5) sur la paroi de telle sorte qu'une garniture d'étanchéité du capteur (1) est montée dans l'espace sec.
